# EUROPEAN PATENT APPLICATION

(11) **EP 1 883 228 A1**
(43) Date of publication of application: **30.01.2008**
(21) Application number: 06300830.4
(22) Date of filing: 26.07.2006
(51) Int. Cl.: H04N 5/445

(54) **A broadcast system with a local electronic service guide generation**

(71) Applicant: GEMPLUS, 13420 Gémenos (FR)
(72) Inventor: Praden, Anne-Marie, 13122, VENTABREN (FR); Brugal, Hervé, 13008, MARSEILLE (FR)

(57) **Abstract**

The invention relates to a broadcast system comprising a terminal system (100, 200), the terminal system comprising a display module (120) for displaying an Electronic Service Guide (ESG) of programs to be broadcasted, said ESG initiating the storing of a program selected through such ESG and broadcasted onto said terminal system, characterized in that the broadcast system comprises a module for creating and displaying (120, 130) a local ESG on the terminal system (100,200) which local ESG corresponds to programs which have been selected, broadcasted and stored into the terminal system, said local ESG (210, 212) launching the rendering of a stored program in response to actuating a corresponding item in the local ESG.

## Description

The invention relates to broadcasting of content in communication systems typically including a remote server, a terminal, a communication network which can be of the mobile telephony type, and a broadcasting network (DVB, DAB, ...) on which the content is broadcasted.

Such content may be voice, video, service, images, and more generally any kind of data that may be directly or indirectly rendered available to an end-user in the communication network.

The communication network may be any kind of network comprising a remote server and a float of terminals, the previously exemplified content being broadcasted onto the terminals for the purpose of availability to the end-user. The communication network may typically be a mobile telephony network, in which the terminals are either mobile phone, smart phones, or communicating PDAs (Personal Digital Assistant) .

The invention may be more particularly related to the case where the terminals host a personal token, i.e. a token that includes personal data such as authenticating credentials necessary for access to the communication network and/or personal content data, i.e. some data which were memorized in the token after having been downloaded from a remote server. Such personal token may be a SIM card, a mass memory card, a mass memory SIM, an USB enabled SIM card, an USB token, or any kind of other storing and/or authenticating token in mobile or fix communication network.

We know among other networks, the DVB (Digital Video Broadcasting), DAB (Digital Audio Broadcasting), DMB (Digital Multimedia broadcasting), ISDB-T (Integrated Services Digital Broadcasting - terrestrial), MBMS (Mobile Broadcast Multicast Service), which have in common the fact that they are used for data broadcasting.

The broadcast channel contains more or less services according to the bandwidth available for the data transmission.

Users connected to the network are able to receive the services if the services are in clear or if the users have subscribed to them.

Each country has its own services distributed by the operator(s).

Allowing for the user the discovery of services available on the network, a discovery service called "Electronic service guide" (ESG) is proposed. This service is either broadcasted and then available for every user either sent on the point-to-point network (3G network for example) on the user request, or available on a web portal of the operator and accessible for the user using an internet connection on the communication network (WAP for example).

Depending of the broadcast network we know several discovery services like ESG:

For the analog TV, the program guide is broadcasted on the "teletext" service.

For the digital TV at home, the program guide is called EPG "Electronic Program Guide" but is similar to ESG.

The name ESG is now used for the digital TV for handheld devices but is only slightly different from the guide proposed on the Digital TV for home.

The fundamental difference lies on the fact that the ESG is transmitted in IP packets for the new networks for Mobile TV. EPG is in contrary a service transmitted in MPEG2 transport packets which is the transport link for TV at home.

ESG is a kind of paper magazine for the TV programs in electronic form.

ESG like the well known paper magazine contains several information on programs as listed below among others: Program name, operator identifier who broadcasts the data (Canal+, TPS, ...), start and end broadcast time, parental rating of the program, program's synopsis, actors, critics, URL links to other information that could be acquired on other channel (a mobile telephony point-to-point channel for example), technical information for the terminal to acquire the given program (for example retrieve the address in the broadcast network).

This information is transmitted in "metadata" and transmitted in "containers" that are updated when some data are modified.

In the user receiver (terminal), an engine acquires the data, possibly stores them and transmits them to a graphic engine that will organize the data for display on the user request.

Thanks to this ESG, the user will choose the program he wants to watch or consume. The services may be broadcasted in several languages that the user may select in the ESG.

In such broadcast systems the services are sent on live and the user may be not available to watch the services he wants to follow: for example a serial. He has the possibility to store the content using a PVR (personal Video Recorder). The PVR allows the user to store the channel during a period of time and then replay the recorded stream on user request.

It appears that the operations later required to the user, i.e. reminding later that he had recorded such program, reminding the reason why he felt some interest in it, and manipulating the terminal so as to play the program again, appear so heavy and fastidious to a user that he may not feel like watch the program again nor even launch the original recording operation.

The invention aims at providing a solution to this problem.

In this respect, a main purpose of the invention is to make easier to an end-user the later consuming of a broadcasted and stored content.

This purpose is achieved by way of the invention as recited in the appended claims.

Other purposes, benefits and aspects of the invention will appear through the following description, which is made in reference to the appended figures, among which:

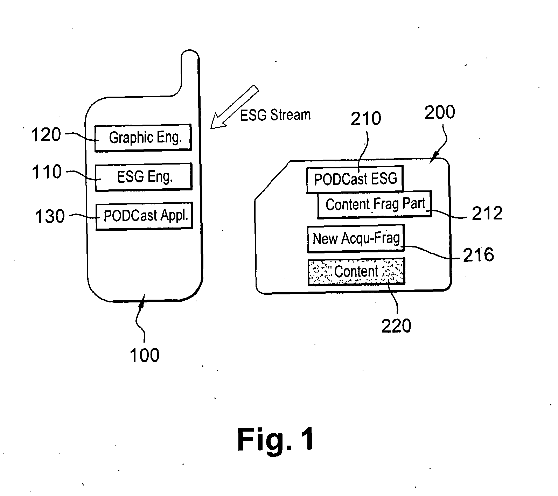

- Figure 1 depicts a mobile phone which is associated with a personal token, which constitute a terminal system according to a preferred embodiment of the invention,
- Figure 2 is a diagram which represents illustrates flows of data and successive steps in the same preferred embodiment of the invention.

The present embodiment will be described in the context of a broadcasting system in which data, video/audio data and other services are broadcasted inside IP packets which are transferred on transport layers which layers can be of different natures : the network can be a DVB-H network and then the transport layer is the usual layer in the framework of digital TV " MPEG2 transport stream" or the network can be the 3G network with MBMS technology (Multimedia Broadcast/Multicast Service) and the transport layer is then the UMTS.

These broadcast networks have the specificity to transmit IP packets in multicast mode.

A multicast type IP address (224.XXX.XX.X) is used and these services are aimed at groups of terminals which receive the data in parallel and which share the same protocol.

A terminal desiring to receive a service which is transmitted on a given multicast address will have to previously register as being part of this group.

A protocol is used in IP mode for performing this registering. This protocol is named IGMP (Internet Group Management Protocol). A multicast router which is name « the querier » asks to the IP stack(s) which are connected what addresses are the multicast addresses processed by the applications supported by the stack.

A registering is then performed and when the router receives an address being part of the required group it transmits the IP packet corresponding to the stack or application which has requested it.

The applications can also register as being part of a group (join process) in a proactive mode and the stack then sends a packet which is supported by the IGMP protocol to the router so as to indicate this registering.

As well-known, a service exists which allows the user to figure out available programs, which service is called ESG (Electronic Service Guide). In this service technical information is found which allow to the terminal to acquire a program (for example to retrieve the address of the program in a broadcasting network). The ESG information is classically transferred in a fragment called « Acquisition fragment » which is associated to the service. In this fragment some data are to be found which are either a reference to a SDP file which describes the considered service, or the SDP file itself. The SDP file is a description in technical terms for the acquisition of the service: what IP protocol is used (for example RTP protocol), what multicast address is used, which port is used, etc... this file is essential pour for carrying out the « join » process.

In this particular embodiment of the invention, a handset and a SIM card hosted by the handset are used which are depicted on figure under respective references 100 and 200.

Both handset 100 and SIM card 200 include a processor and a memory.

Handset 100 includes a set of logical modules, i.e. in the present case software modules. The handset includes namely an ESG engine 110, which acquires the broadcasted ESG data, and stores them for later display to the user on the screen of the handset. The handset further hosts a Graphic User Interface 120, which acquires data to be displayed from the ESG engine and displays them accordingly to the user.

Handset 100 further hosts a local PODCast application 130, functionality of which will be described below. Such Local PODCast application 130 transmits data to the SIM card 200 which are stored as PODCast ESG data in the memory of the SIM card 200, under the reference 210.

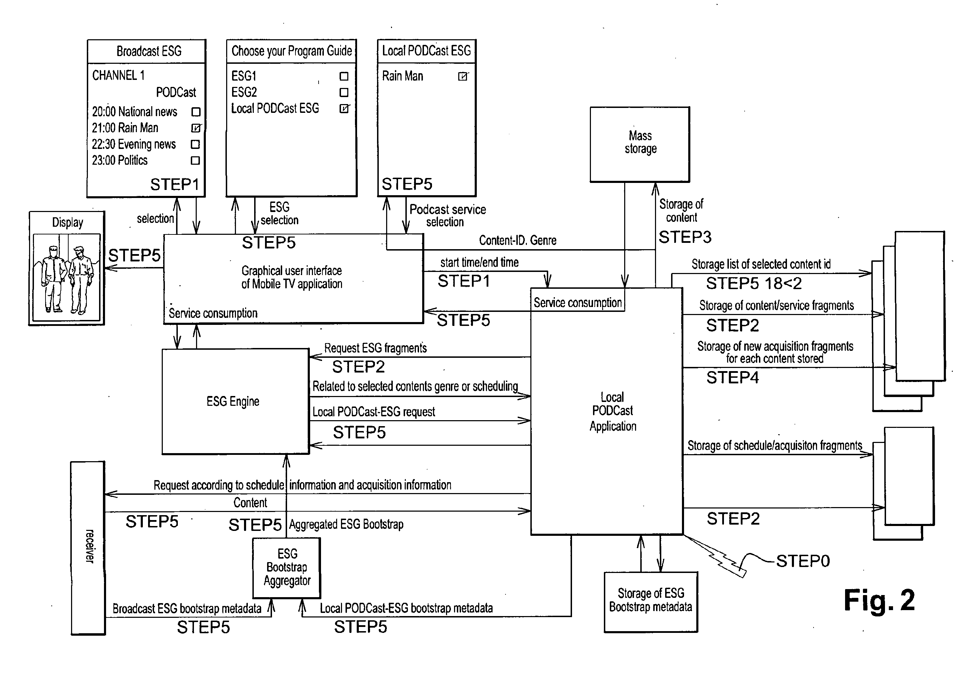

Successive processing and storing operation are performed among and between these different items, which will now be described in reference to figure 2.

On figure 2, steps 0 to 5 are represented, which sometimes include several transfers of information. Numerical references relating to the different steps are sometimes repeated inside figure 2 for this particular reason.

A first step referenced STEP 0 on figure 2 consists in the mobile operator sending through OTA service (Over-The-Air service) to the terminal 100 some parameters that set-up the PODCast application 130.

An ESG bootstrap operation allows the terminal 100 to know which ESG data are available and how to acquire them.

In this ESG bootstrap, the terminal 100 discovers in a descriptor (ESGProviderDiscovery Descriptor, for DVB-CBMS for example), the ESG providers that deliver ESGs in a given IP platform. With the Provider Identifier found in this descriptor the terminal is able to parse another descriptor (ESGAccessDescriptor) to boot the ESG of the specific provider.

This mechanism allows the transmission of several ESG in an IP platform.

The parameters sent Over-The-Air to the terminal 100 by the operator are information which are necessary to build the ESG bootstrap and signal the local PODCast-ESG in the ESG bootstrap: among others ESG providerDiscovery descriptor parameters (providerURI, providerName, providerLogo, Provider ID, ProviderInformation URL or providerAuxiliaryData...), service provider information, ESGAccessDescriptor parameters (for example IP address where the local PODCast-ESG is available).

These parameters could also contain others parameters such as those necessary to connect the PODCast application 130 to the ESG stream (of this specific operator) coming from the broadcast network when this PODCast application 130 has a direct access to the ESG data.

As a further step referenced STEP 1 on figure 2, the user chooses the services he wants to watch even if he is not available. This choice may be proposed to the user in different ways:

A first possibility may be offered to the user which consists in the user choosing the services through the graphical user interface (GUI) 120 of the Local PODCast application 130 of the service provider and flags these services (selection). The list of services is stored in the handset 100 or in the SIM card (Storage list of selected content-id).

As a second possibility, the user may choose the services on the service provider portal and the list of services is then sent by the service provider to the user's terminal (or removable element like SIM card) using OTA service.

As a third possibility, the user may choose a list of service by genre of content, or timing, using a user interface in the Mobile Application: for example storage of all the football matches of the current day. ("the order").

As depicted on figure 2, the displayed ESG corresponds to a series of items which may be interactively selectively actuated by the user. For example, the user may move a emphasizing items through the different items which correspond to different programs available for storage. When the user wants to record a specific program he places the emphasizing element onto the specific item corresponding to the program, and he then presses a validating key on the keyboard of the handset. Many other ways to use a menu as the present ESG so as to actuate one of the items of the menu are known and possible according to the invention. For example, the menu may be moved until the wished item comes into a selection window, and the validating key is thereafter depressed. The Local PODCast application 130 interprets such action as a command for programming the record operation of the identified program.

At step 2, the local PODCast application 130 sends a request to the ESG engine 120 in the terminal 100, to get ESG fragments corresponding to "the order" or the selected content-id. As the ESG engine has acquired and stored the ESG data corresponding to future broadcasted content, the fragments are available in a data memory part dedicated to the ESG engine in the memory of the terminal 100.

In another embodiment of the invention, the PODCast application 130 may receive the ESG stream directly from the receiving equipments of the handset after registration to the right address. This address could be one parameter stored in the terminal or SIM card by the operator during STEP 0 using OTA service.

In both of theses examples, the PODCast application 130 obtains the ESG elements of content description (content fragment) useful for user to discover the services (synopsis, critics, actors, ....) that he has selected during the selection process and stores them in a content fragment part 212 in the memory of the SIM card 200. The PODCast application 130 obtains also from the fragments received the content-id of the services corresponding to "the order" and completes the content-id list.

The PODCast application 130 obtains the schedule and acquisition fragments and stores them in a schedule/acquisition fragments part which will wake-up the terminal and acquire the contents also. This information will be used to wake-up the handset at the adequate time and to acquire the content from the receiving equipment of the handset.

In the handset, at STEP 3 the PODCast application 130 wakes-up the receiving equipment using the schedule information, then using the acquisition fragment, the PODCast application 130 joins the appropriate IP address to receive through the receiving equipment the programs compliant to "the order" or the list of services stored (content-id). Then the local PODCast application 130 stores the content acquired in a mass storage part 220 of the SIM card, or of the terminal, such as audio programs or music or video programs, for playback on the mobile device or the personal computer. The application 130 keeps the address of storage and the name of the program using for example some information in the PODCast ESG 210 (content-ID or service-ID). This information will be used during the next described step i.e. PODCast-ESG set-up.

Some other information is also retrieved in the acquisition fragment (for example the mime type of the content that will be used by the display application to decode the content) and stored for a further use in the next step (local PODCast-ESG set-up).

At STEP 4, i.e. Local PODCast-ESG set-up, the local PODCast application is then able to build a new acquisition fragment 216 corresponding of the PODcast service with a SDP file containing information that the terminal needs in order to be able to receive and consume the content. The local PODCast application 130 stores this new acquisition fragment 216 in the SIM card. This new acquisition fragment 216 contains the address where the content has been stored and kept in the terminal system during the services storage step and information stored coming from the broadcasted acquisition fragment (see STEP 3). The local PODCast-ESG data 210 with the different fragments stored is then complete and ready for use.

The last step referenced STEP5 consists in consumption of the service.

At this STEP 5, the local PODCast-ESG data 210 are proposed to the user in a mobileTV application. When the user selects this ESG, the local PODCast-ESG data 210 is requested through the MobileTV application at its specific address which could be for example LocalUICC/my_ESG_PODCast. These local PODCast-ESG data 210 are advantageously compliant to the ESG specification defined in the DVB-CBMS or OMA-BCAST group depending of the broadcast system used. Then this Local PODCast-ESG could be interpreted by the same ESG engine 110 in the terminal 100 as the standard ESG data ("ESG") coming from the broadcast network.

As depicted on figure 2, the displayed ESG corresponds to a series of items which may be interactively selectively actuated by the user. For example, the user may move a emphasizing items through the different items which correspond to different stored programs. When the user wants to launch the display of a specific program he places the emphasizing element onto the specific item corresponding to the program, and he then presses a validating key on the keyboard of the handset. Many other ways to use a menu as the present ESG so as to actuate one of the items of the menu are known and possible according to the invention. For example, the menu may be moved until the wished item comes into a selection window, and the validating key is there after depressed. The Local PODCast application interprets such action as a command for retrieving the identified program and rendering it on the terminal for it to be enjoyed by the user.

The content is retrieved from the memory of the card, and is displayed in the stored format, which may be for example RSS or Atom syndication formats, for example when the considered network is the internet

In another embodiment of the invention, the local PODCast-ESG 210 is transmitted in another way. In the solution described above the mobileTV application is aware of the PODCast application 130 and of the address where the PODCast-ESG 210 is available. In this other embodiment the mechanism of bootstrap ESG described above is used so as to allow the discovery of several ESG and the local PODCast-ESG is considered as a new ESG.

The application 130 in the terminal 110 receiving the ESG bootstrap from the broadcast adds automatically in the bootstrap descriptor (ESG providerDiscovery descriptor) information coming from the PODCast application 130 for example ESG provider information (as providerURI, providerName, providerLogo, ProviderID, ProviderInformation URL or providerAuxiliaryData) and Service provider information. It adds the address in the ESGAccessDescriptor where the local PODCast-ESG 210 is available. This local address may be a parameter that the operator sent via OTA during phase 0.

With this new solution the discovery of the local PODCast-ESG is identical to the discovery of other ESG. The local PODCast-ESG is proposed to the user in the same way than another ESG.

Another way to add this information in the ESG bootstrap is at the head-end side directly by the operator itself, if the operator proposes this service to its users. If the user has used the PODCast service, when the user browses in the local PODCast-ESG, some services or programs are proposed to the user; if the user has not used the PODCast service then when he browses in the local PODCast-ESG proposed by the mobileTV application, the local PODCast application displays no service.

The mobile operator can insert in the ESG bootstrap, at the level of the server, the bootstrap information of the local PODCast ESG - i.e. for example ESG provider information and service provider information as well as ESG Access descriptor providing the address where the local PODcast ESG is available in the terminal. In such case this address is preferably identical for the different terminals (for example: localUICC/my_ESG_PODCast).

At the end, the user selects his PODCast service through the Mobile TV application. A request of the local PODCast-ESG is then sent at the specific address (ex: LocalUICC/my_ESG_PODCast). The local PODCast-ESG (XML file) is then sent to the ESG engine in the terminal that interprets the data in the same way than the ESG data coming from the broadcast network. The services or programs available through the PODCast application are then proposed to the user using the same graphic engine 120 linked to the ESG engine 110 than the graphic engine 120 used to display the standard Local PODCast application 130 coming from the broadcast network. The user is then able to choose the program he wants to watch at the current time. For the user, there is no difference to access to services coming from the broadcast and the services coming from the PODCast application.

One main advantage is that it is the same ESG engine that will interpret the Local PODCast-ESG than the broadcasted ESG. This is then totally transparent for the user.

Using the acquisition fragment of the local PODCast-ESG, the MobileTV application is then able to retrieve the service or program stored in the mass memory storage.

The invention has been described in connection to a PODcast application stored and run in the terminal. In an alternate embodiment, the PODcast application may be stored in the SIM card, the content being either stored in the SIM card or in the terminal. In the case where the PODcast application is in the SIM card, the SIM card may contain also the ESG engine (included or not in the PODcast application) and then it interprets the ESG data directly. This ESG engine in the SIM card registers itself by the router of the terminal so as to receive the broadcasted ESG data.

User is not always available to watch the services he wants to follow. There is an advantage for him to define the services he is interested in and even if he is not available the terminal stores the program for him in a local mass storage (embedded in the terminal or within a removable memory card). Then he is able to discover through a new ESG service provided by an engine in the terminal or within the removable element, the list of service that is available for him in the storage part as a PODCast service. This is a local PODCast service.

The presently described embodiment comprises an automatic erasing functionality of the content that the user consumes. In this case all the ESG metadata related to this service are erased also to keep the local PODCast-ESG consistent to the services available.

The Graphic engine 120 may also propose to the user the manual erasing of the services.

There is an interest to keep the content in a mass storage and the ESG data describing the services in the same element, a removable element such as the present SIM card for the portability. The user may change the terminal (handset) and he may retrieve the data in the same way than in the other handset, the Local PODCast-ESG 210 being compliant to the ESG standards.

The advantage here is also to provide a technically efficient discovery service of the programs stored in the mass storage, entirely compatible to the ESG engine used for the broadcast part.

Another advantage of the present embodiment of the invention is to propose to the user a discovery of the services stored entirely compatible to the service discovery he uses for the on-live services. For the user, the look and feel of the application is identical as it is handled by the same engine in the terminal.

## Claims

1. - A broadcast system comprising a terminal system (100, 200), the terminal system comprising a display module (120) for displaying an Electronic Service Guide (ESG) of programs to be broadcasted, said ESG initiating the storing of a program selected through such ESG and broadcasted onto said terminal system, **characterized in that** the broadcast system comprises a module for creating and displaying (120, 130) a local ESG on the terminal system (100,200) which local ESG corresponds to programs which have been selected, broadcasted and stored into the terminal system, said local ESG (210, 212) launching the rendering of a stored program in response to actuating a corresponding item in the local ESG.

2. The broadcast system according to claim 1, **characterized in that** the terminal system (100, 200) comprises a hosting terminal (100) and a personal token (200) hosted by the hosting terminal (100) and the ESG corresponding to selected, broadcasted and stored programs is stored in the personal token (200).

3. The broadcast system according to claim 2, **characterized in that** the personal token (200) is an authenticating token for authentication in a communication network.

4. The broadcast system according to claim 2 or claim 3, **characterized in that** the selected and broadcasted program is stored in the personal token (200).

5. The broadcast system according to anyone of claims 2 to 4, **characterized in that** the terminal system (100, 200) runs an application (130) which picks up a selection by the user of a program in the ESG corresponding to programs to be broadcasted, the application then initiating the storing of the selected broadcasted content, said application (130) being run in the hosting terminal (100).

6. The broadcast system according to anyone of the preceding claims, **characterized in that** it comprises an application (130) which picks up a selection of a program in the ESG and initiates the storing of ESG data corresponding to the selected and then stored program, the application (130) extracting said ESG data out of ESG of the programs to be broadcasted as stored in the terminal system.

7. The broadcast system according to anyone of claims 1 to 5, **characterized in that** it comprises an application (130) which picks up a selection of a program in the ESG and initiates the storing of ESG data corresponding to the selected and then stored program, the application (130) extracting said ESG data out of an arriving ESG stream.

8. The broadcast system according to anyone of the preceding claims, **characterized in that** the terminal system (100, 200) comprises an ESG engine (110) which acquires ESG data and initiates the displaying of ESG data by the terminal system (100, 200), the same ESG engine (110) acquiring ESG data as to programs to be broadcasted and ESG data as to already stored programs.

9. A personal token (200) for being hosted in a hosting terminal (100) inside a communication network, said hosting terminal having a display module (120) for a displaying an Electronic Service Guide (ESG), the personal token (200) storing already broadcasted programs (220), the personal token (220) being **characterized in that** it stores an ESG (210, 216) corresponding to the programs (220) stored in the personal token (200) such ESG (210, 216) allowing the user to launch the rendering of one of the stored programs by actuating a corresponding item of the ESG as displayed by a said hosting terminal (100).

10. The personal token according to claim 9, **characterized in that** it stores and runs a local ESG application (130) which picks up a selection of a program in the ESG corresponding to the programs (220) stored in the personal token (200) and initiates the rendering of such program on a terminal (100) hosting the personal token (200).
